**Europäisches Patentamt**

**European Patent Office**

**Office européen des brevets**

(19)

(11) Veröffentlichungsnummer: **0 009 248**
**A1**

(12)

# EUROPÄISCHE PATENTANMELDUNG

(21) Anmeldenummer: **79103546.2**

(22) Anmeldetag: **20.09.79**

(51) Int. Cl.³: **G 06 F 13/06**

(30) Priorität: **22.09.78 DE 2841222**

(43) Veröffentlichungstag der Anmeldung: **02.04.80**
**Patentblatt 80/7**

(84) Benannte Vertragsstaaten: **AT BE CH FR GB IT LU NL
SE**

(71) Anmelder: **Telefonbau und Normalzeit GmbH, Mainzer
Landstrasse 128-146, D-6000 Frankfurt (Main) (DE)**

(72) Erfinder: **Agricola, Manfred, Dipl.-Ing., Rhönstrasse 15,
D-6368 Bad Vilbel (DE)**

(54) **Schaltungsanordnung zur Adressierung von modular aufgebauten und erweiterungsfähigen Daten-
Speicheranordnungen.**

(57) Die erfindungsgemässe Schaltungsanordnung dient dazu, mit einem aus Adressen- und Datenleitungen bestehenden Ansteuersystem eine Vergrösserung und Erweiterbarkeit des adressierbaren Daten-Speichervolumens zu erreichen. Bei direkter Adressierung mit z.B. 16 Bit lassen sich 64k Adressen bilden. Durch die Ausnutzung auch der Datenleitungen (DAT) und Anlegen einer Vorabinformation auf den Adressenleitungen (ADR) lässt sich das adressierbare Speichervolumen wesentlich vergrössern. Die Version mit zwei Vergleichern (VG1/VG2) wird angewendet, wenn die Adressierung am Anfang eines Speicherbereiches beginnt, bzw. wenn die Einzeladresse direkt der gewünschten Speicherzelle übereinstimmt. Wird jedoch ein Adressenbereich angeboten, der nicht mit Anfang und Ende eines Speicherbausteines übereinstimmt, so wird diese Übereinstimmung durch Anwendung des Addierwerkes (ADW) herbeigeführt, damit mit der Einzeladresse (niederwertige Bits) die gewünschte Speicherzelle direkt erreicht werden kann.

**EP 0 009 248 A1**

Telefonbau und Normalzeit GmbH, 6000 Frankfurt/Main
Mainzer Landstrasse  128 - 146

Schaltungsanordnung zur Adressierung von modular
aufgebauten und erweiterungsfähigen Daten-Speicheranordnungen

Die Erfindung betrifft eine Schaltungsanordnung zur
Adressierung von modular aufgebauten und erweiterungsfähigen Daten-Speicheranordnungen mit wahlfreiem Zugriff, die durch über Adressier-und Datenleitungsbündel eingegebene Informationsbits angesteuert werden.

Durch die Anwendung von mit gespeicherten Programmen
arbeitenden Steuereinrichtungen werden immer größer
werdende Speicherkapazitäten beispielsweise in Datenverarbeitungs-und Fernmeldevermittlungsanlagen benötigt. Auch bei sehr großen Speicheranordnungen sollen
die  Zugriffszeiten zu den gespeicherten Daten, insbesondere bei Vermittlungsanlagen, kurz bleiben, weil
dadurch die Verarbeitungszeit bei Steuerungsprozeduren wesentlich beeinflußt wird.

Deshalb werden Speicherzellen, die je nach Ausführungsform des Speichers ein Bit oder mehrere Bits, also
ein Wort enthalten können, im allgemeinen parallel
adressiert, wozu dann ein Leitungsbündel mit einer
entsprechend großen Anzahl von Adern erforderlich ist.

- 2 -

Da andererseits die Steuereinrichtungen nur Befehle mit einer vorgegebenen Struktur ausgeben können, ist es nicht möglich das Leitungsbündel zur Adressierung beliebig groß vorzusehen, ohne dabei einen erheblichen Aufwand für Umschalteinrichtungen und Treiber-bzw. Empfängerschaltungen einzusetzen.

Die für solche Daten-Speicheranordnungen verwendeten Halbleiterspeicher sind handelsübliche,als Bauelemente ausgebildete Speicherbausteine, die zumeist bitweise oder wortweise organisiert und mit verschiedener Speicherkapazität (z.B. 1k Bit oder Worte)erhältlich sind. Sie enthalten bereits eine Decodierung zur Auswahl jeweils einer Speicherzelle. Bei einer Speicherkapazität von $2^n$ Bit oder Worte weist daher ein Speicherbaustein n Adressiereingänge auf. Außerdem besitzt er einen Selektionseingang, über den er aktiviert werden muß, wenn in ihm eine Speicheroperation, d.h. ein Lese-oder Schreibvorgang ablaufen soll.

Bei einer derartigen Daten-Speicheranordnung läßt es sich im Falle der Ansteuerung über ein z.B. 16 Bit breites Adressenleitungsbündel leicht ausrechnen, daß durch einen einzigen 16 Bit-Befehl nur eine Speicherkapazität von 64k Bit oder Worte adressiert werden kann. Weisen die Speicherbausteine eine Kapazität von z.B. 1k auf, so muß der 16-Bit breite Befehl in 6 + 10 Bit aufgeteilt werden, wobei die 6 ersten Bits zur Auswahl des Speicherbausteins decodiert werden müssen. Es sind also hierbei außer den Speicherbausteinen zusätzliche Logik-Bausteine erforderlich.

Da bei groß angelegten Verarbeitungseinheiten eine Speicherkapazität von 64k nicht ausreicht, andererseits aber die Grundstruktur der Anordnung und auch

- 3 -

die Verarbeitungszeiten nicht wesentlich veränderbar sind, müssen besondere Maßnahmen zur Adressierung größerer Speicherkapazitäten getroffen werden.

Es ist bereits bekannt, Befehle so aufzuteilen, daß über ein Minimum von Leitungsadern ausreichend große Befehlsstrukturen übertragen werden können, indem dann diese Teilbefehle nacheinander auf das Leitungsvielfach gegeben werden.

Eine derartig arbeitende Sendeanordnung, also ein Teil einer Verarbeitungseinheit, ist beschrieben in der DE-AS 25 55 329. Hier heißt es ab der Zeile 50 in der Spalte 4 wörtlich: "Ein auf diese Weise übertragenes Befehlswort kann daher beispielsweise doppelt soviel Bits umfassen wie die Sammelschiene Adern umfaßt".

Um eine solche Anordnung betreiben zu können, sind Umschalteeinrichtungen vorzusehen, die es ermöglichen, die Teile eines Befehlswortes nacheinander zu senden. Naheliegend ist es, solche Umschalteeinrichtungen auch an der Empfangsstelle vorzusehen. Zur Steuerung solcher Anordnungen sind jedoch zusätzliche Aufwendungen und möglicherweise auch zusätzliche Steueradern erforderlich.

Die Aufgabe der Erfindung besteht darin, eine Schaltungsanordnung zur Adressierung von Daten-Speicheranordnungen anzugeben, die modular erweiterbar sind, eine große Kapazität aufweisen und mit geringem zusätzlichem Aufwand und einheitlichen Baugruppen aufgebaut werden können.

Erfindungsgemäß wird diese Aufgabe durch eine Anordnung gelöst, wie sie im kennzeichnenden Teil des Patentanspruchs 1 oder im entsprechenden Teil des Anspruches 2

- 4 -

angegeben ist.

Mit dem pro Speicherbereich angeordneten Vergleicher VG1 und dem zugehörigen Einstellregister E-REG läßt sich jeder gleichartig ausgestaltete Speicherbereich seinem Verwendungszweck oder seinem räumlichen Einsatzort anpassen. Durch die Hinzuziehung der Datenleitungen für die Adressierung und die Befehlsgabe in zwei zeitlich nacheinander folgenden Stufen läßt sich eine ausreichend große Zahl von Speicherplätzen adressieren, auch wenn nicht die volle Kapazität, die jeweils 16 Adern auf dem Adressen—und Datenleitungsbündel bieten, genutzt wird.

Die bedarfsweise Zuordnung eines Addierwerkes ADW ermöglicht es, Adressierungen auch unabhängig von der räumlichen Anordnung der Speicherzellen innerhalb der Speicherbausteine vorzunehmen. Mit **Hilfe** des Addierwerkes wird die modifizierte Adresse dann dem richtigen Speicherbaustein zugeordnet.

Nachfolgend werden anhand von Zeichnungen Ausführungsbeispiele näher erläutert.
Es zeigt:

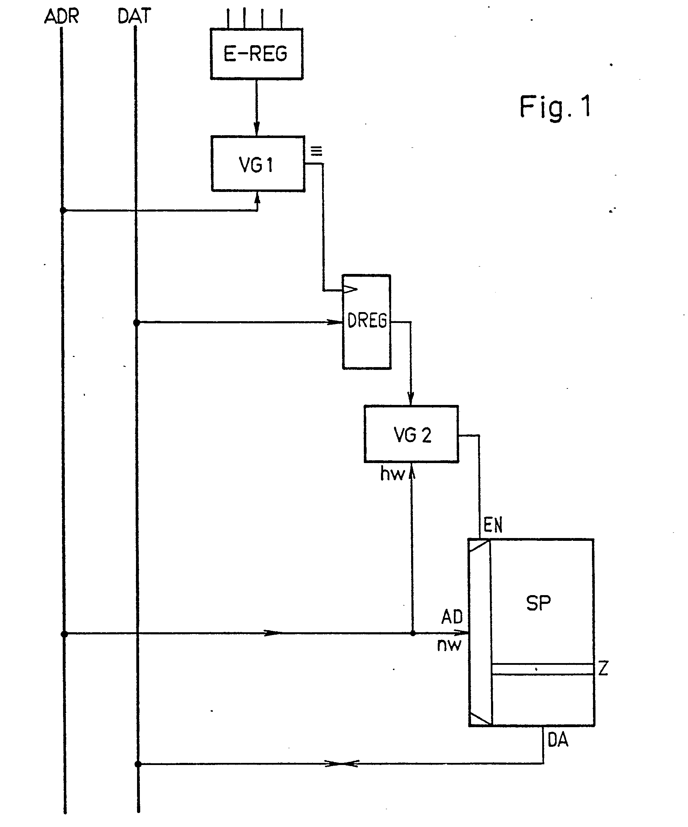

      Fig.1 die Ansteuerung eines Speicherbausteines
           mit zwei Vergleichern,
      Fig.2 die Ansteuerung eines Speicherbausteines
           mit Vergleicher, Addierwerk und Speicherbezirkserkenner.

Für die Ansteuerung einer bestimmten Speicherzelle Z im Speicherbaustein SP werden zunächst sowohl auf dem Adressenleitungsbündel (ADR) als auch auf dem Datenleitungsbündel (DAT) parallel binär codierte Informationsbits gesendet. Auf jedem Leitungsbündel à 16 Adern können bis zu 16 Bit gesendet werden. Die auf dem Adressenleitungsbündel ADR ankommenden Bits werden einem pro Speicherbereich vorhandenen Vergleicher VG1 zugeführt. Ein Speicherbereich besteht aus einer größeren Anzahl von (beispielsweise 64) Speicherbausteinen. Der Vergleicher VG1 stellt fest, ob die angebotene Adresse (16Bit oder ein Teil davon z.B. 4Bit zur Bildung von beispielsweise 16 Speicherbereichen) mit der im Einstellregister E-REG vorhandenen Codierung übereinstimmt. Das Einstellregister besteht aus mehreren, der Anzahl der auszuwertenden Bits entsprechenden Menge von Codierschaltern, die bestimmte Potentiale an den Vergleicher anlegen oder aus einem programmierbaren Speicher (PROM), der für den gleichen Zweck eingesetzt ist.

Wenn nun die auf dem Adressenleitungsbündel ADR angebotenen Bits abgeschaltet werden, entsteht bei vorher festgestellter Übereinstimmung eine Impulsflanke am Ausgang des Vergleichers, die das ebenfalls pro Speicherbereich vorhandene Datenregister D-REG veranlaßt, die noch auf dem Datenleitungsbündel DAT anstehenden Informationsbits, die auch zur Adressierung dienen, zu übernehmen. Damit ist der Speicherbereich, für den die nachfolgend auf dem Adressenleitungsbündel ADR neu gesendete Volladresse gilt, markiert. Die in diesem Zeitabschnitt sowohl auf dem Adressen-als auch auf dem Datenleitungsbündel gesendeten Informationen dienen beide ausschließlich zur Adressierung.

Auf diese Weise lassen sich je nach Ausnutzung der Anzahl von Informationsbits (max.16), die zu Beginn der Prozedur als Teil der Adresseninformation auf dem Datenleitungsbündel DAT gesendet und dem Vergleicher VG1 angeboten wird, theoretisch bis zu $2^{16} = 65536$ Speicherbereiche mit (im Beispiel) je 64 Speicherbausteinen zu jeweils 1k Speicherkapazität bilden. Nach diesem Auswählvorgang, wird auf dem Adressenleitungsbündel ADR eine 16 Bit breite Volladresse angeboten, die in ihren höherwertigen (z.B.6) Bits der im Datenregister enthaltenen Information, also den vorher auf dem Datenleitungsbündel DAT gesendeten Bits, entspricht. Da mit diesen 6 Bits $2^6 = 64$ verschiedene Einstellmöglichkeiten gegeben sind, lassen sich somit innerhalb eines jeden Speicherbereiches beispielsweise 64 Speicherbausteine zu je 1k Speicherworte oder-bits adressieren, wenn die restlichen 10 Bits des Adressierbefehlswortes direkt einem beispielsweise 1k Speicherbaustein angeboten werden.

Durch die Übereinstimmung von Teilen der Gesamtadresse (Inhalt des D-REG und höherwertige Bits der Volladresse) lassen sich gleiche Speicherbereiche mit beliebig auswählbaren Adressteilen ansteuern.

Nachdem somit das Datenregister D-REG die im ersten Zeitabschnitt empfangenen Bits enthält und diese dem pro Speicherbaustein vorhandenen Vergleicher VG2 anbietet, werden die höherwertigen Bits hw der Volladresse an den VG2 angelegt. Bei Übereinstimmung dieser Adreßteile entsteht am Ausgang des VG2 ein Signal, das über den Signaleingang EN des Speicherbausteines den Empfang der restlichen 10 Bit (nw) in der Decodierung des Speicherbausteines bewirkt.

Die im Speicherbaustein integrierte Decodierung ist daraufhin in der Lage, die gewünschte Speicherzelle Z direkt anzusteuern. Dadurch können über das Datenleitungsbündel DAT Informationen in den Speicher eingeschrieben werden oder aus dem Speicher ausgelesen werden.

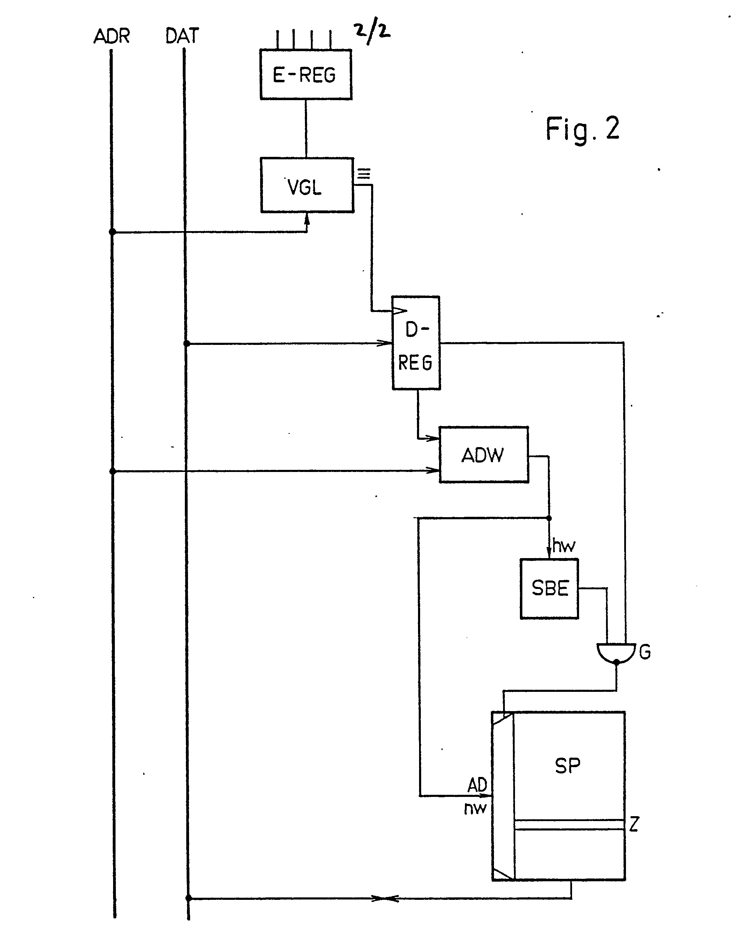

Bei der Anordnung nach Fig.2 ist anstelle des Vergleichers VG2 ein Addierwerk eingesetzt, das den Inhalt des Registers D-REG zu dem im zweiten Zeitabschnitt auf dem Adressenleitungsbündel ADR gesendeten Adressierbefehlswort hinzuaddiert. Die durch diese Operation gewonnene neue Adresse wird wie vorher beschrieben in beispielsweise 6 höherwertige und 10 niederwertige Bits aufgeteilt. Die höherwertigen Bits hw werden einem Speicherbezirkserkenner SBE zugeführt. Der Speicherbereich läßt sich auf diese Weise in einzelne Speicherbezirke unterteilen, die jeweils einen Teil der zu einem Speicherbereich zählenden Speicherbaustein enthalten. Der Speicherbezirkserkenner SBE enthält eine Decodierung und bereitet damit eines der pro Speicherbausteine vorhandenen Gatter G vor. Das betreffende Gatter G wird nur dann erfüllt, wenn das zu dem Speicherbereich gehörende Register D-REG eine Information (Signal ≠ 0) enthält. Damit werden fehlerhafte Doppelansteuerungen verhindert. Das Ausgangssignal des Gatters G bewirkt über den Eingang EN des Speicherbausteines den Empfang der restlichen 10 Bit der Adresse, damit die Speicheroperation wie bereits beschrieben stattfinden kann.

P 3468
Gö/sch
21.8.1979

Telefonbau und Normalzeit GmbH, 6000 Frankfurt/Main
Mainzer Landstrasse  128 - 146

Schaltungsanordnung zur Adressierung von modular
aufgebauten und erweiterungsfähigen Daten-Speicheranordnungen

P a t e n t a n s p r ü c h e :

1.Schaltungsanordnung zur Adressierung von modular
aufgebauten und erweiterungsfähigen Daten-Speicheranordnungen mit wahlfreiem Zugriff, die durch
über Adressen-und Datenleitungsbündel eingegebene
Informationsbits angesteuert werden,
dadurch gekennzeichnet,
daß jeder Daten-Speicheranordnung ein erster und
ein zweiter Vergleicher (VG1,VG2) zugeordnet sind,
daß durch den ersten Vergleicher die auf einem
Adressenleitungsbündel (ADR) angebotene Adreßinformation mit einer vorgegebenen Adreßinformation
verglichen wird, und daß bei einer Übereinstimmung
beider Adressen die Aufnahme der über das Datenleitungsbündel (DAT) angebotenen Information in den
durch die betreffende Adresse bestimmten Speicherbereich der Datenspeicheranordnung erfolgt (D-REG),
daß durch den zweiten Vergleicher die in den Speicherbereich aufgenommene Information mit einem Teil
der über das Adressenleitungsbündel nachfolgend einlaufenden Volladresse verglichen wird, und daß bei
Übereinstimmung auch dieser Informationen die durch
den anderen Teil der Volladresse festgelegte Speicherzelle zur Aufnahme der über das Datenleitungsbündel einlaufenden, einzuspeichernden Information oder zur Abgabe der bereits eingespeicherten, über das Datenleitungsbündel weiterzugebenden Information bereitgestellt wird.

2. Schaltungsanordnung zur Adressierung von modular aufgebauten und erweiterungsfähigen Daten-Speicheranordnungen mit wahlfreiem Zugriff, die durch über Adressen-und Datenleitungsbündel eingegebene Informationsbits angesteuert werden, dadurch gekennzeichnet, daß jeder Daten-Speicheranordnung ein Vergleicher (VG), ein Addierwerk (ADW) und ein Speicherbezirkserkenner (SBE) zugeordnet sind, daß durch den Vergleicher die auf einem Adressenleitungsbündel (ADR) angebotene Adreßinformation mit einer vorgegebenen Adreßinformation verglichen wird, und daß bei einer Übereinstimmung beider Adressen die Aufnahme der über das Datenleitungsbündel angebotenen Information in den durch die betreffende Adresse bestimmten Speicherbereich der Datenspeicheranordnung erfolgt (D-REG), daß durch das Addierwerk zu der in den Speicherbereich aufgenommenen Information die über das Adressenleitungsbündel nachfolgend einlaufende Volladresse hinzuaddiert wird, und daß mit einem Teil dieses Additionsergebnisses vom Speicherbezirkserkenner der Speicherbezirk voreingestellt wird, wo mit dem anderen Teil des Additionsergebnisses die Speicherzelle festgelegt wird, die zur Aufnahme der über das Datenleitungsbündel einlaufenden, einzuspeichernden Information oder zur Abgabe der bereits eingespeicherten, über das Datenleitungsbündel weiterzugebenden Information bereitgestellt wird.

- 3 -

3. Schaltungsanordnung nach den Ansprüchen 1 oder 2,
dadurch gekennzeichnet,
daß die vorgegebene, den Speicherbereich bestimmende Adreßinformation in einem aus manuell einstellbaren Codierschaltern bestehenden Einstellregister (E-REG) gebildet wird.

4. Schaltungsanordnung nach den Ansprüchen 1 oder 2,
dadurch gekennzeichnet,
daß die vorgegebene, den Speicherbereich bestimmende Adreßinformation in einem aus programmierbaren Lesespeichern bestehenden Einstellregister (E-REG) gebildet wird.

P 3468
Gö/sch
30.8.1979

1/2

ADR  DAT

E-REG

Fig. 1

VG 1

DREG

VG 2

hw

EN

SP

AD
nw

Z

DA

Fig. 2

0009248

Europäisches Patentamt

**EUROPÄISCHER RECHERCHENBERICHT**

Nummer der Anmeldung

EP 79 10 3546

| | **EINSCHLÄGIGE DOKUMENTE** | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X. | US - A - 3 983 537 (PARSONS)<br>* Von Spalte 2, Zeile 66 bis Spalte 4, Zeile 3; von Spalte 5, Zeile 64 bis Spalte 6, Zeile 68; Figuren 4,5 *<br><br>-- | 1,3 | G 06 F 13/06 |
| X | FR - A - 2 232 256 (LABORATOIRE CENTRAL DE TELECOMMUNICATIONS)<br>* Von Seite 3, Zeile 2 bis Seite 4, Zeile 23; Figuren 1,2 *<br><br>-- | 1 | |
| | IEEE TRANSACTIONS ON COMPUTERS, Dezember 1969, Seiten 1132 bis 1134, New York USA<br>ABERTH: "A multiple computer linkage".<br>* Seite 1133, linke Spalte, Absätze 2 bis 4 ; Figuren 1,2 *<br><br>-- | 1 | **RECHERCHIERTE SACHGEBIETE (Int. Cl. 3)**<br><br>G 06 F 13/06 |
| | ELECTRONIC DESIGN, 8.November 1977, Seiten 82-85, Littleton, USA<br>HOLLAND: "Break the 65-kbyte address barrier".<br>* Von Seite 83, rechte Spalte, Absatz 5 bis Seite 84, rechte Spalte, Absatz 1 *<br><br>-- | 1 | |
| | ELEKTRONIK, September 1977, Seiten 89 bis 91, München, DE<br>BLOMEYER-BARTENSTEIN: "Mio-Byte-Arbeitsspeicher für Mikrocomputer-systeme." | 1<br><br>./. | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 14-11-1979 | R. WEBER |

EPA form 1503.1  06.78

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | * Von Seite 89, rechte Spalte, Absatz 3 bis Seite 90, rechte Spalte, Absatz 3; Figur 2 * | | |
| | -- | | |
| | COMPUTER DESIGN, August 1977, Seiten 99 bis 105, Concord, USA CARROLL: "Solving Moss-produced ROM programming problems with base registers". | 2 | |
| | * Von Seite 103, linke Spalte, Zeile 1 bis Seite 104, linke Spalte, Absatz 3; Figur 4 * | | RECHERCHIERTE SACHGEBIETE (Int. Cl. ³) |
| | -- | | |
| PE | GB - A - 2 005 880 (BUNKER RAMO) | 1,3 | |
| | * Seite 1, Zeilen 19-42; Seite 2, Zeilen 93-126; Figuren 3,4 * | | |
| | & FR - A - 2 406 283 | | |
| | -- | | |
| P | DE - A - 2 737 087 (SIEMENS) | | |
| | * Von Seite 5, Zeile 20 bis Seite 6, Zeile 12; Figur * | | |
| | -- | | |
| | IBM TECHNICAL DISCLOSURE BULLETIN, August 1975, Seiten 878-879, New York, USA ANNUNZIATA: "Basic storage module selection check". | 1 | |
| | * Vollständiger Artikel * | | |
| | ---- | | |